# FASCICULE DE BREVET EUROPEEN

(11) **EP 3 107 302 B1**
(45) Date de publication et mention de la délivrance du brevet: **06.09.2023**
(21) Numéro de dépôt: 16174489.1
(22) Date de dépôt: 15.06.2016
(51) Int. Cl.: H04N 21/233, H04N 21/439, H04N 21/845, H04N 21/8549, H04N 21/858, H04N 21/234, H04N 21/44

(54) **PROCÉDÉ ET DISPOSITIF DE SUBSTITUTION D'UNE PARTIE D'UNE SEQUENCE VIDEO**
VERFAHREN UND VORRICHTUNG ZUM AUSTAUSCH EINES TEILS EINER VIDEOSEQUENZ
METHOD AND DEVICE FOR SUBSTITUTING A PORTION OF A VIDEO SEQUENCE

(30) Priorité: 18.06.2015 FR 1555577
(43) Date de publication de la demande: 21.12.2016
(73) Titulaire: Orange, 92130 Issy-les-Moulineaux (FR)
(72) Inventeur: MONCOMBLE, Ghislain, 22310 Plestin Les Greves (FR); RONDET, Patrick, 22300 Lannion (FR)

(56) Documents cités:
- EP-A1- 2 575 341
- EP-B1- 2 575 341
- CN-A- 104 065 977
- FR-A1- 2 811 111
- US-A1- 2008 162 597
- US-A1- 2010 269 128
- US-A1- 2014 278 308
- US-A1- 2014 310 342

## Description

### DOMAINE TECHNIQUE

La présente invention se rapporte au domaine des services audiovisuels numériques et concerne en particulier un procédé de montage vidéo automatisé pour les formations et présentations en ligne.

### ART ANTÉRIEUR

Le domaine de la formation à distance subit d'importantes mutations depuis la démocratisation d'Internet. La formation à distance, ou enseignement à distance, désigne l'ensemble des dispositifs de formation à distance, qu'il s'agisse de cours par correspondance, de MOOC (Massive Open Online Course) ou de formations en ligne. Elle s'applique tant à la formation continue qu'à la formation initiale, tant de manière individuelle que collective. Ces formations utilisent de plus en plus les outils numériques et les moyens de l'Internet.

Si la formation à distance peut répondre à des situations d'éloignement géographique avec la formation souhaitée, elle trouve également une utilité dans des situations de handicap, de contrainte horaire ou financière. Ce type de formation concerne un public très large composé d'élèves, d'étudiants, de personnes en période d'inactivité ou de personnes en activité.

Le caractère flexible et ouvert de ces formations offre aux apprenants la possibilité de gérer de manière autonome le temps consacré à l'apprentissage, et les laisse libre d'entrer ou de sortir du dispositif. En outre, une formation est "ouverte" dans la mesure où elle est facilement accessible matériellement. Enfin, la formation "ouverte", "flexible", se veut accessible au plus grand nombre, et à toute personne souhaitant suivre une formation, contrairement à des enseignements inscrits dans un cursus académique normatif. Le tutorat, l'apprentissage et des séances de cours traditionnels en salle peuvent y être associés.

Les MOOC sont des cours en ligne ouverts à tous. Ce type d'enseignement rend accessible à tous les enseignements dispensés par les meilleures écoles et universités du monde, transformant ainsi profondément l'accès au savoir et à la connaissance dans la plupart des domaines.

Le succès des MOOC est lié à leur mode de fonctionnement très simple : les enseignants donnent des cours magistraux qui sont filmés avant d'être diffusé via le réseau Internet. Les cours sont le plus souvent découpés en tronçons de courte durée et associés à un forum de discussion permettant aux élèves d'obtenir des éclaircissements, d'approfondir un sujet ou de poser des questions. Lors de la diffusion des cours en direct, ou lors de sessions de questions-réponses organisées à la suite d'un cours, les enseignants peuvent répondre en direct aux questions des étudiants. Cette interactivité entre étudiants et enseignants est une caractéristique forte des MOOC et participe beaucoup à leur succès.

Les MOOCS sont enregistrés et accessibles sur des sites dédiés, sur les sites des universités ou des écoles au travers d'un simple navigateur Internet. De cette façon, les cours sont consultables depuis n'importe où dans le monde et à tout moment.

L'efficacité d'un cours, qu'il soit présentiel ou qu'il s'agisse d'un MOOC, dépend pour beaucoup de la capacité de l'enseignant à capter l'attention de son auditoire. Dans le cas des MOOC, une attention particulière doit être portée sur la qualité de réalisation des vidéos ainsi que sur la fréquence et la qualité des échanges entre enseignants et élèves.

Bien que l'interactivité soit un élément important dans l'efficacité pédagogique d'un cours en ligne tel qu'un MOOC, des interventions multiples dans un cours peuvent s'avérer contre-productives. Le cours étant suivi par un large public, les interventions peuvent être nécessaires pour la bonne compréhension de certains mais s'avérer pénibles pour d'autres. Ainsi, il peut être avantageux lors de la mise en ligne de la vidéo d'un cours, de supprimer de la vidéo les parties correspondant à des interventions telles que des questions d'élèves et réponses de l'enseignant, tout en laissant ces séquences accessibles aux élèves qui désirent les consulter.

La mise en ligne de tels cours nécessite souvent un montage vidéo préalable. Par exemple, lorsque plusieurs caméras sont mises en oeuvre, l'intervention d'un technicien peut être nécessaire pour sélectionner les prises de vues. Ce montage ayant un coût, et les cours étant gratuits, il convient d'automatiser autant que possible cette étape de montage. Pour cela, différentes solutions techniques existent. Par exemple, il existe des techniques basées sur la détection d'activité vocale permettant de basculer d'une caméra à une autre selon la personne qui parle. D'autres solutions techniques permettent d'effectuer automatiquement un cadrage sur un visage ou encore de suivre une personne se déplaçant. De telles dispositions techniques permettent de réduire le coût de production de la vidéo en évitant la mise en place d'une régie ou la réalisation d'un montage avant la mise en ligne d'un cours.

Dans certains cas, les techniques existantes ne permettent pas d'automatiser complètement l'étape de montage. En particulier, l'intervention d'un technicien reste nécessaire pour repérer les parties du cours correspondant à des interventions et les extraire de la vidéo principale.

On connait malgré tout dans le domaine de l'audiovisuel des techniques permettant par exemple de détecter le début et la fin d'une séquence publicitaire afin de la supprimer d'un contenu. La plage correspondant à la séquence peut alors être déterminée par la détection d'un changement de niveau sonore ou d'une image particulière dans le flux vidéo. Toutefois, ces techniques ne sont pas satisfaisantes lorsqu'elles sont utilisées dans le cadre d'un MOOC. En effet, les transitions de début et de fin d'une intervention lors d'un cours sont beaucoup plus vagues et ne peuvent être détectées par de telles techniques. D'autre part, dans le cadre d'un MOOC, il est important de garder une trace sur le moment de l'intervention et son contenu.

Ainsi, il existe un besoin pour une solution technique permettant de réaliser automatiquement un montage à partir d'une vidéo telle qu'une vidéo d'un cours en ligne de type MOOC, et en particulier de supprimer certains passages tout en conservant une information dans le contenu vidéo sur les passages supprimés.

Le document CN 104 065 977 A concerne un procédé de traitement de fichier audio/vidéo, consistant à déterminer le fichier audio/vidéo en fonction des informations d'attribut de l'utilisateur.

Le document US 2014/278308 concerne un procédé de mesure de l'engagement d'un utilisateur dans un flux de contenu.

Le document US 2014/310342A1 concerne des techniques de synchronisation des modifications de la partie audiovisuelle d'un fichier multimédia.

Le document US 2010/269128 A1 concerne la direction d'un système multimédia pour effectuer des actions spécifiques, telles que le remplacement d'une séquence originale de contenu multimédia, par exemple, une publicité non ciblée dans une émission télévisée, par un contenu multimédia de remplacement, par exemple, une publicité ciblée.

Le document EP2575341 A1 concerne un procédé et un dispositif de consultation d'un message vocal.

Le document US 2008/162597A1 concerne un procédé de substitution d'une séquence par un contenu représentatif.

### RÉSUMÉ DE L'INVENTION

À cet effet, l'invention concerne un procédé de substitution dans un contenu audiovisuel d'une partie du contenu définie par une plage temporelle, par une séquence audiovisuelle de substitution, le procédé étant remarquable en ce que la séquence de substitution est représentative de la partie à remplacer. L'invention est caractérisée en ce que le procédé est tel que les instants de début et de fin de la plage temporelle sont déterminés par la détection d'un premier et d'un second événement particulier dans le flux audiovisuel et qu'au moins un des premier et second événements particuliers est identifié par reconnaissance d'au moins un mot clef dans une composante audio du contenu audiovisuel.

De cette façon, il est possible d'extraire une partie d'un contenu vidéo, comme par exemple une partie correspondant à une intervention d'un élève lors d'un cours de type MOOC, et de remplacer cette partie par une autre séquence plus courte consistant par exemple en une transition entre la partie précédent la partie extraite et la partie suivant la partie extraite. Cette séquence de transition est telle qu'elle est représentative de la partie remplacée. Par exemple, la séquence de transition peut comporter un message composé de mots clefs relatifs à la partie remplacée, ledit message pouvant par exemple être vocalisé lors de ladite séquence de transition, ou encore être inclus dans au moins une image générée à cet effet, image affichée durant ladite transition. Ainsi, un utilisateur visionnant la vidéo est averti qu'une séquence a été extraite et dispose d'une information quant au contenu ayant été remplacé. Selon une réalisation particulière, le procédé est tel que la séquence de substitution est générée à partir d'une analyse sémantique de la partie du contenu définie par la plage temporelle. L'analyse sémantique de la séquence remplacée permet d'en extraire des concepts qui permettent de générer une séquence de substitution qui soit représentative de la séquence extraite.

La plage temporelle correspondant à la partie à remplacer est identifiée automatiquement par détection d'un évènement de début et d'un évènement de fin. De cette façon, l'intervention d'un technicien n'est pas nécessaire pour déterminer la ou les parties à remplacer dans le contenu vidéo. Une séquence vidéo correspondant par exemple à un cours en ligne peut ainsi être mise en ligne plus rapidement et à moindre coût.

Selon une réalisation particulière, le procédé est tel que la partie extraite est mémorisée et en ce que la séquence de remplacement comprend un lien interactif adapté pour déclencher la restitution de la partie extraite.

Lorsqu'une partie d'un contenu audiovisuel est remplacée, celle-ci est mémorisée de façon à pouvoir être consultée en cas de besoin. La séquence de remplacement peut alors comporter un lien vers cette partie. De cette façon, lorsqu'un utilisateur visionne le contenu, il peut facilement consulter la séquence remplacée s'il le souhaite. Par exemple, la séquence de remplacement peut comprendre un lien interactif de type lien hypertexte pointant vers l'emplacement de stockage de la partie remplacée.

Selon une réalisation particulière, le procédé est tel que le contenu audiovisuel résultant de la substitution comprend un index indiquant le début de la séquence de remplacement.

Lorsqu'une séquence est remplacée dans un contenu audiovisuel, son emplacement est indexé au niveau du contenu audiovisuel à partir duquel la séquence est extraite. De cette façon, un utilisateur peut accéder à une liste des séquences remplacées dans le contenu. L'index peut également servir à inscrire une marque correspondant aux parties remplacées sur une ligne de temps affichant de manière classique l'avancement de la lecture. Un utilisateur peut ainsi facilement repérer les plages temporelles remplacées dans le contenu et y accéder en y déplaçant un curseur de lecture.

Le procédé permet de sélectionner automatiquement une séquence à remplacer en se basant sur un ou plusieurs mots clefs détectés dans une composante audio du contenu. Par exemple, le début d'une intervention de type question/réponse entre un élève et un enseignant dans un cours de type MOOC peut être détecté lorsque l'enseignant prononce, une expression du type « vous pouvez poser votre question ». Une telle expression peut être détectée par des techniques classiques de reconnaissance vocale. De même, la fin d'une intervention peut être détectée par la reconnaissance d'une expression du type « reprenons le cours ». L'enseignant peut ainsi contrôler le début et la fin des séquences à remplacer en prononçant au moment opportun des mots ou expressions appropriées.

Selon un mode de réalisation particulier, le procédé est tel qu'au moins un des premier et second évènements particuliers est identifié par un changement de locuteur dans une composante audio du contenu audiovisuel.

En détectant un changement de locuteur, le procédé peut détecter le début d'une séquence à remplacer. Par exemple, dans un cours de type MOOC, le procédé peut déterminer qu'un élève prend la parole par des techniques d'analyses vocales connues, afin de déterminer le début d'une plage temporelle correspondant à une séquence à remplacer. Le procédé permet ainsi de déterminer automatiquement le début et/ou la fin d'une plage temporelle à remplacer.

Selon un mode de réalisation particulier, le procédé est tel qu'au moins un des premier et second évènements particuliers est identifié par un changement de source audio dans une composante audio du contenu audiovisuel.

De cette façon, le procédé permet de détecter le début ou la fin d'une plage temporelle selon la source audio utilisée. Par exemple, dans un amphithéâtre dont les bancs sont équipés de microphones individuels, le procédé peut déterminer qu'un individu prend la parole lorsque qu'un autre microphone que celui de l'enseignant est activé. Le procédé permet ainsi de déterminer automatiquement le début et/ou la fin d'une plage temporelle à remplacer. Ce mode de réalisation est particulièrement opportun lorsqu'au moins une partie du montage vidéo est réalisée lors du tournage initial du document audiovisuel.

Selon un mode de réalisation particulier, le procédé est tel qu'au moins un des premier et second évènements particuliers est identifié par analyse d'image dans une composante vidéo du contenu audiovisuel.

Le début et/ou la fin de la plage temporelle correspondant à une partie du contenu à remplacer est déterminée par une analyse des images de la composante vidéo du contenu audiovisuel. Par exemple, l'invention peut mettre en oeuvre un algorithme de reconnaissance de geste afin de détecter par exemple un élève levant la main dans une assemblée d'étudiant afin de demander la parole, ou encore une reconnaissance de visage du locuteur pour distinguer le visage du présentateur des autres visages dont les élèves. Le procédé permet ainsi de détecter automatiquement le début d'une partie de contenu à remplacer.

Selon une réalisation particulière, le procédé est tel que la séquence de substitution est représentative de la séquence extraite en ce qu'elle comprend un résumé de la partie extraite.

La séquence de substitution est composée suite à une analyse sémantique de la partie à remplacer permettant la génération d'un résumé. Par exemple, la composante audio du contenu est soumise à un algorithme de reconnaissance de la parole afin de déterminer des mots clefs représentatifs du contenu substitué. Ces mots clefs peuvent être intégrés à la séquence de substitution de manière à donner des informations synthétiques sur la partie remplacée. Le résumé peut également consister en une reprise sous forme textuelle d'une question posée par un élève. Le résumé peut être intégré dans la séquence vidéo de remplacement, sous la forme par exemple d'un message vocalisé lors de ladite séquence de transition, ou d'un texte inclus dans au moins une image de la séquence générée à cet effet. De cette façon, un étudiant visionnant un cours en ligne peut immédiatement avoir une idée de l'intérêt que peut constituer une intervention avant de décider ou non de la visionner.

L'invention se rapporte également à un dispositif de substitution dans un contenu audiovisuel, d'une partie du contenu définie par une plage temporelle, par une séquence audiovisuelle de substitution, le dispositif comportant une unité de traitement adaptée pour générer une séquence de substitution représentative de la partie dudit contenu.

Dans un mode de réalisation particulier, le dispositif comprend :
- Un module de détection des instants de début et de fin de la plage temporelle par détection d'un premier et d'un second évènement particulier dans le flux audiovisuel,
- Un module d'extraction de la partie du contenu audiovisuel comprise entre le début et la fin de la plage temporelle,
- Un module d'analyse sémantique de la partie extraite et générer une séquence de substitution à partir du résultat de l'analyse,
- Un module d'insertion de la séquence de substitution à la place de la partie extraite.

L'invention concerne aussi un terminal comportant un dispositif de substitution tel que décrit ci-dessus.

L'invention concerne également un programme d'ordinateur comportant les instructions pour l'exécution du procédé de substitution, lorsque le programme est exécuté par un processeur.

L'invention concerne aussi un support d'informations lisible par un processeur sur lequel est enregistré un programme d'ordinateur comprenant des instructions pour l'exécution des étapes du procédé de substitution.

Les différents modes ou caractéristiques de réalisation précités peuvent être ajoutés indépendamment ou en combinaison les uns avec les autres, aux étapes du procédé substitution.

Les terminaux, dispositifs, programmes et supports d'information présentent au moins des avantages analogues à ceux conférés par le procédé de substitution décrit ci-dessus.

### LISTE DES FIGURES

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :
- Les **figures 1a, 1b et 1c** représentent de manière schématique une séquence vidéo dans laquelle est une partie remplacée selon un mode particulier de réalisation.
- La **figure 2** illustre les différentes étapes du procédé de substitution selon un mode de réalisation particulier de l'invention.
- La **figure 3** représente de manière simplifiée un dispositif de substitution selon une réalisation particulière de l'invention.

### DESCRIPTION DÉTAILLÉE

L'invention va maintenant être décrite en prenant l'exemple d'un cours dispensé par un enseignant devant une assemblée d'étudiant, le cours étant filmé afin d'être diffusé en ligne sous forme de MOOC. L'invention peut toutefois trouver une application dans d'autres contextes. Par exemple, l'invention peut être utilisée afin de remplacer une séquence publicitaire détectée dans un programme audiovisuel par un écran d'information énumérant sous forme de liste les différents spots publicitaires contenus dans la séquence originale, l'écran d'information pouvant en outre contenir des liens vers les différents spots, ou encore dans une vidéo de présentation de produit.

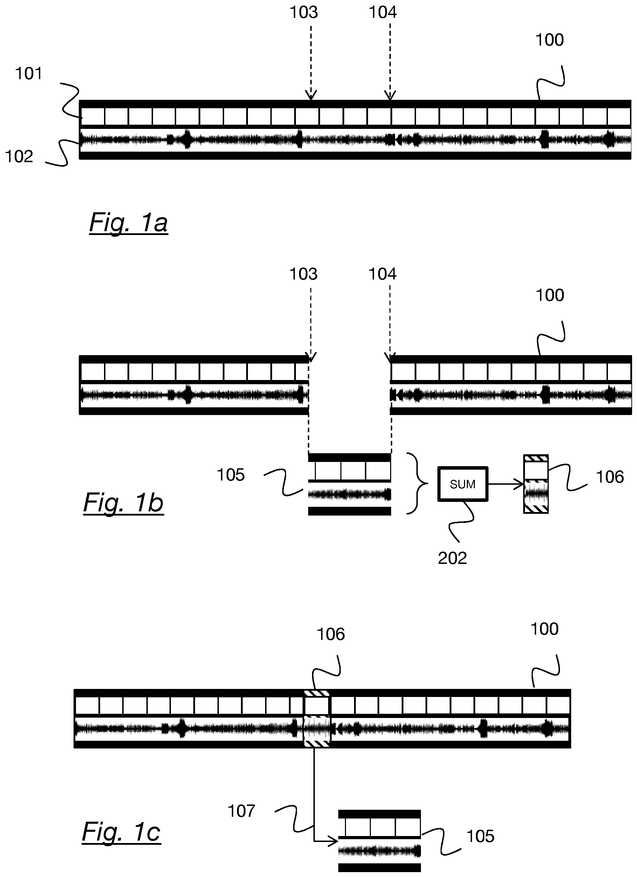

La **figure 1a** représente une séquence vidéo 100 enregistrée lors d'un cours de type MOOC dispensé par un enseignant devant une assemblée d'élèves. Dans cet exemple, la vidéo comprend une composante vidéo 101 et une composante audio 102.

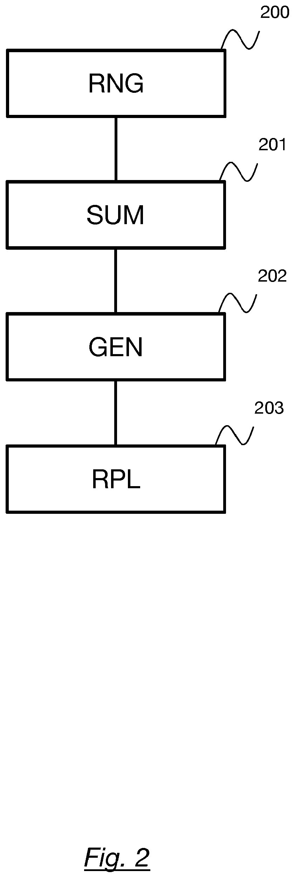

Lors d'une première étape 200 représentée sur la **figure 2**, le contenu audiovisuel est analysé de façon à détecter un premier et un second évènements particuliers. Ces premiers et seconds évènements particuliers constituent le début et la fin d'une plage temporelle correspondant à une partie du contenu à remplacer. Dans cet exemple, l'analyse vise à déterminer une plage temporelle correspondant à une intervention d'un élève durant le cours. Cette analyse peut être mise en oeuvre selon différentes techniques.

La composante audio est analysée de façon à repérer un ou plusieurs mots clefs signalant le début ou la fin d'une intervention. Pour cela, le procédé peut utiliser un algorithme de reconnaissance vocale adapté. De manière classique, l'algorithme de reconnaissance vocale peut être entraîné au préalable pour reconnaître des mots clefs particuliers. Par exemple, l'algorithme peut être entraîné à partir d'un corpus d'utilisateurs prononçant différents mots clefs. Dans un deuxième temps, un filtre adapté pour filtrer les fréquences vocales et supprimer les bruits de fond peut être appliqué à la composante audio de la séquence. Enfin, la composante audio est présentée en entrée de l'algorithme afin de détecter des mots clefs signalant le début et la fin d'une intervention. De tels mots clefs peuvent par exemple être prononcés par l'enseignant lorsqu'il donne la parole à un élève et lorsqu'il reprend le fil de son cours. Il est ainsi possible de délimiter une partie du contenu correspondant à une interruption du cours.

Selon une réalisation particulière, la composante audio est analysée de façon à repérer un changement de locuteur. Une telle disposition permet de détecter par exemple un instant où un individu autre que l'enseignant prend la parole. Pour cela, un algorithme classique adapté à la reconnaissance du timbre de la voix peut être utilisé. Cet algorithme peut être entraîné au préalable pour reconnaître la voix de l'enseignant. Ainsi, lorsque la composante audio de la séquence est présentée en entrée de l'algorithme, celui-ci peut détecter un instant correspondant à la prise de parole par un individu autre que l'enseignant. Une telle disposition permet la détection d'un instant de début d'une interruption de cours.

Selon un mode de réalisation particulier, la composante audio de la séquence est analysée de façon à détecter un changement de source audio caractéristique d'un changement de locuteur. Par exemple, lorsque l'aménagement d'un amphithéâtre prévoit un microphone pour l'enseignant et au moins un microphone destiné aux étudiants, le procédé interprète un changement de microphone comme un changement de locuteur permettant de signaler le début et/ou la fin d'une intervention. Pour cela, le procédé peut mettre en oeuvre un algorithme adapté pour reconnaître dans le signal audio une signature caractéristique d'un microphone particulier. Pour cela, l'algorithme peut subir au préalable un apprentissage à partir de signaux audio capturés à partir de différents microphones afin de déterminer une signature caractéristique de chacun des microphones. Par exemple, la signature peut comprendre la largeur de la bande de fréquence capturée par un microphone, un gain ou un niveau de bruit propre au microphone. Il est ainsi possible, suite à l'analyse de la composante audio par un tel algorithme, de déterminer un instant dans la séquence correspondant à l'activation ou la désactivation d'un microphone particulier. Une telle disposition permet la détection d'un instant de début ou de fin d'une interruption du cours.

Selon un mode de réalisation particulier, au moins un évènement marquant le début ou la fin d'une plage temporelle correspondant à une partie de la séquence à remplacer est déterminé par une analyse de l'image. Par exemple, l'analyse d'image peut consister à rechercher un changement de plan, un changement de caméra ou encore un geste particulier ou un visage particulier dans la séquence. Pour cela, le procédé peut mettre en oeuvre un algorithme de caractérisation des mouvements afin de détecter un geste particulier effectué par exemple par un élève ou un enseignant participant à un cours de type MOOC. Par exemple, l'algorithme de caractérisation d'un mouvement peut déterminer qu'un élève demande la parole en levant la main dans l'assemblée. Pour cela, une séquence vidéo faisant apparaître l'assistance lors d'un cours peut être présentée en entrée de l'algorithme de façon à ce qu'une analyse des images soit réalisée. À l'issue de cette analyse, l'algorithme détermine différentes plages temporelles correspondant à des interruptions du cours.

Selon un mode particulier de réalisation, les différentes méthodes d'analyse décrites ci-dessus peuvent être combinées de façon à utiliser par exemple une analyse de la vidéo pour détecter le début ou la fin d'une plage temporelle correspondant à une séquence à remplacer, et une analyse de la composante audio pour en détecter la fin.

Suite à cette analyse, un premier évènement 103 et un second évènement 104 peuvent être détectés dans la séquence 100. Ces deux évènements permettent de définir une plage temporelle située entre l'évènement 103 et 104 correspondant à une partie de la séquence à remplacer.

La **Figure 1b** illustre la séquence 100 de laquelle a été extraite une partie 105 correspondant à la plage temporelle définie par les évènements 103 et 104. La partie 105 correspond par exemple à l'intervention d'un élève pendant un cours suivie de d'une réponse de l'enseignant. Cette partie est analysée à l'étape 201 illustrée sur la **figure 2****.** Cette analyse est par exemple effectuée par un algorithme de reconnaissance vocale travaillant sur la composante audio de la partie 105 après extraction de la séquence et application d'un filtre de débruitage par exemple. L'algorithme mis en oeuvre est adapté pour produire une liste de mots clefs représentatifs de l'intervention de l'élève. Pour cela, l'étape comprend par exemple la mise en oeuvre d'un algorithme de conversion de la parole en texte (« speech to text » en anglais, ou TTS) de façon à obtenir le texte de l'intervention. À partir de ce texte, un second algorithme peut par exemple produire un résumé de l'intervention en reprenant par exemple des phrases clefs, la question de l'élève et/ou la réponse apportée par l'enseignant. De tels algorithmes sont connus de l'homme du métier et ne sont pas abordés ici plus en détails.

À partir de cette analyse, une séquence de remplacement 106 représentative de la séquence 105 est générée à l'étape 202. Par exemple, une séquence représentative peut être générée par incrustation vidéo de mots clefs identifiés à l'étape 201 ou d'un résumé. La durée de la séquence générée peut être différente de la durée de la séquence à remplacer. Par exemple, la séquence générée peut être une courte séquence comportant un message indiquant qu'une intervention a eu lieu.

Selon une réalisation particulière, un logiciel de « text mining » est appliqué au texte de l'intervention obtenu à partir d'une reconnaissance vocale, afin de définir une pertinence de l'interruption. De tels algorithmes sont connus de l'homme du métier et ne sont pas abordés ici en détails.

À partir de cette analyse, une séquence de remplacement 106 peut être générée à l'étape 202 en remplacement de la séquence 105, mais sans contenu représentatif de ladite séquence 105 si le contenu n'a pas été jugé pertinent. Par exemple, la séquence 106 est alors une simple transition de plan.

Selon un mode particulier de réalisation, une série de séquences de remplacement 106 peuvent être générées et positionnées successivement à l'étape 202 en remplacement de la séquence 105, dans le cas où une série de contenus représentatifs distincts de ladite séquence 105 ont été identifiés. Par exemple, la séquence 106 générée comprend une succession de messages indiquant chacun qu'une intervention a eu lieu.

En variante, la séquence 106 ne comprend qu'un seul message de remplacement, ledit message indiquant que plusieurs interventions distinctes ont eu lieu.

Selon une réalisation particulière, la séquence de remplacement comporte au moins un lien interactif 107 permettant d'accéder à la séquence remplacée, comme par exemple un lien hypertexte. Dans le cas ou plusieurs parties sont remplacées par une seule séquence, la séquence peut comporter plusieurs liens interactifs permettant d'accéder aux différentes parties remplacées. De tels liens hypertextes, lorsqu'ils sont sélectionnés par un utilisateur, peuvent déclencher la lecture d'une partie remplacée mémorisée dans un espace de stockage. Ainsi, un utilisateur peut visionner le cours sans qu'il soit interrompu par des interventions et accéder à la séquence remplacée en cas de besoin par une simple interaction sur la séquence de remplacement ou à partir de l'index.

La **figure 1c** représente la séquence vidéo initiale 100 dans laquelle la partie 105 a été remplacée par la séquence générée 106. Ce remplacement est réalisé à l'étape 203 du procédé de substitution illustrée sur la **figure 2****.** Le remplacement peut être effectué en utilisant des techniques classiques d'édition vidéo. Selon une réalisation particulière, le contenu audiovisuel résultant de la substitution comprend un index indiquant le début de la séquence de remplacement. Par exemple, des informations d'horodatage relatives à différentes parties remplacées dans une séquence vidéo peuvent être répertoriées dans un index de façon à ce qu'un utilisateur puisse immédiatement avoir accès à l'une des séquences remplacées. Par exemple, lorsque la vidéo est visionnée à partir d'un lecteur multimédia adapté, les différentes entrées de l'index peuvent apparaitre sous la forme d'indices visuels intégrés dans une barre de progression de la lecture.

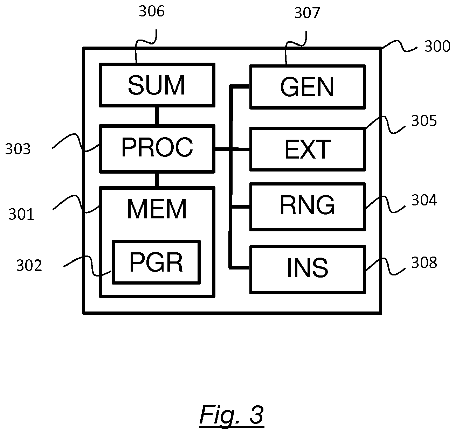

La **figure 3** illustre un dispositif 300 mettant en oeuvre le procédé de substitution, selon un mode particulier de réalisation de l'invention. Le dispositif comprend un espace de stockage 301, par exemple une mémoire MEM, une unité de traitement 303 équipée par exemple d'un processeur PROC. L'unité de traitement peut être pilotée par un programme 302, par exemple un programme d'ordinateur PGR, mettant en oeuvre le procédé de substitution tel que décrit dans l'invention en référence à la **figure 2****,** et notamment les étapes de détermination des instants de début et de fin d'une plage temporelle par détection d'un premier et d'un second évènement particulier dans le flux audiovisuel, d'extraction de la partie du contenu audiovisuel comprise entre le début et la fin de la plage temporelle, d'analyse sémantique de la partie extraite et de génération d'une séquence de substitution à partir du résultat de l'analyse, et d'insertion de la séquence de substitution à la place de la partie extraite.

À l'initialisation, les instructions du programme d'ordinateur 302 sont par exemple chargées dans une mémoire RAM (Random Access Memory en anglais) avant d'être exécutées par le processeur de l'unité de traitement 303. Le processeur de l'unité de traitement 303 met en oeuvre les étapes du procédé de substitution selon les instructions du programme d'ordinateur 302.

Pour cela, le dispositif comprend, outre la mémoire 301, une unité de traitement adaptée pour déterminer des instants de début et de fin d'une plage temporelle par détection d'un premier et d'un second évènement particulier dans le flux audiovisuel. Un tel traitement peut être réalisé par un module de détection 304 (RNG) mettant en oeuvre par exemple un algorithme de caractérisation de gestuelle et/ou un algorithme de reconnaissance de la parole. Le dispositif comprend également une unité de traitement adaptée pour extraire la partie du contenu audiovisuel comprise entre le début et la fin de la plage temporelle identifiée par le module de détection 304. L'extraction peut être réalisée par un module d'extraction 305 (EXT) mettant en oeuvre un algorithme de traitement vidéo capable d'identifier les trames vidéo et les échantillons audio compris dans la plage temporelle afin de les extraire de la séquence. Le dispositif comporte aussi une unité de traitement apte à réaliser une analyse sémantique de la partie extraite, comme par exemple un module 306 (SUM) mettant en oeuvre un algorithme adapté pour créer un résumé à partir d'une composante audio d'une vidéo. Le dispositif comporte également un module de génération 307 (GEN) d'une séquence de substitution à partir du résultat de l'analyse sémantique, le module 307 pouvant correspondre par exemple à une unité de traitement vidéo adaptée pour réaliser l'incrustation d'un résumé ou de mots clefs dans une vidéo. Enfin, le dispositif comprend un module d'insertion 308 (INS) de la séquence de substitution à la place de la partie extraite dans la séquence vidéo.

Selon un mode particulier de réalisation, le dispositif peut être intégrée dans un équipement de traitement vidéo ou un terminal tel qu'un ordinateur.

## Revendications

1. Procédé de substitution dans un contenu audiovisuel d'une partie du contenu définie par une plage temporelle, par une séquence audiovisuelle de substitution, le procédé étant **caractérisé en ce que** la séquence de substitution est représentative de la partie substituée dudit contenu et **en ce que** les instants de début et de fin de la plage temporelle sont déterminés par la détection d'un premier et d'un second évènement particuliers par reconnaissance d'au moins un mot clef dans une composante audio du contenu audiovisuel.

2. Procédé selon la revendication 1 **caractérisé en ce que** la séquence de substitution est générée à partir d'une analyse sémantique de la partie du contenu définie par la plage temporelle.

3. Procédé selon l'une des revendications précédentes **caractérisé en ce que** la partie extraite substituée est mémorisée et **en ce que** la séquence de substitution comprend un lien interactif adapté pour déclencher la restitution de la partie substituée.

4. Procédé selon l'une des revendications précédentes **caractérisé en ce que** le contenu audiovisuel résultant de la substitution comprend un index indiquant le début de la séquence de substitution.

5. Procédé selon la revendication 1 **caractérisé en ce qu'**au moins un des premier et second évènements particuliers est identifié par un changement de locuteur dans une composante audio du contenu audiovisuel.

6. Procédé selon la revendication 1 **caractérisé en ce qu'**au moins un des premier et second évènements particuliers est identifié par un changement de source audio dans une composante audio du contenu audiovisuel.

7. Procédé selon la revendication 1 **caractérisé en ce que** au moins un des premier et second évènements particuliers est identifié par analyse d'image dans une composante vidéo du contenu audiovisuel.

8. Procédé selon l'une quelconque des revendications précédentes **caractérisé en ce que** la séquence de substitution est représentative de la séquence substituée **en ce qu'**elle comprend un résumé de la partie substituée.

9. Dispositif de substitution dans un contenu audiovisuel, d'une partie du contenu définie par une plage temporelle, par une séquence audiovisuelle de substitution, le dispositif comportant une unité de traitement adaptée pour générer une séquence de substitution représentative de la partie substituée dudit contenu, les instants de début et de fin de la plage temporelle étant déterminés par la détection d'un premier et d'un second évènement particulier par reconnaissance d'au moins un mot clef dans une composante audio du contenu audiovisuel.

10. Terminal **caractérisé en ce qu'**il comporte un dispositif de substitution selon la revendication 9.

11. Programme d'ordinateur comportant les instructions pour l'exécution du procédé de substitution selon l'une quelconque des revendications 1 à 8, lorsque le programme est exécuté par un processeur.

12. Support d'informations lisible par un processeur sur lequel est enregistré un programme d'ordinateur comprenant des instructions pour l'exécution des étapes du procédé de substitution selon l'une quelconque des revendications 1 à 8.

## Patentansprüche

1. Verfahren zum Ersatz, in einem audiovisuellen Inhalt, eines durch einen Zeitbereich definierten Teils des Inhalts durch eine audiovisuelle Ersatzfolge, wobei das Verfahren **dadurch gekennzeichnet ist, dass** die Ersatzfolge für den ersetzten Teil des Inhalts repräsentativ ist, und dass die Anfangs- und Endzeitpunkte des Zeitbereichs durch die Erfassung eines ersten und eines zweiten besonderen Ereignisses durch Erkennung mindestens eines Schlüsselworts in einer Audiokomponente des audiovisuellen Inhalts bestimmt werden.

2. Verfahren nach Anspruch 1, **dadurch gekennzeichnet, dass** die Ersatzfolge ausgehend von einer semantischen Analyse des durch den Zeitbereich definierten Teils des Inhalts erzeugt wird.

3. Verfahren nach einem der vorhergehenden Ansprüche, **dadurch gekennzeichnet, dass** der ersetzte entnommene Teil gespeichert wird, und dass die Ersatzfolge einen interaktiven Link enthält, der geeignet ist, die Wiedergabe des ersetzten Teils auszulösen.

4. Verfahren nach einem der vorhergehenden Ansprüche, **dadurch gekennzeichnet, dass** der aus dem Ersatz resultierende audiovisuelle Inhalt einen den Anfang der Ersatzfolge anzeigenden Index enthält.

5. Verfahren nach Anspruch 1, **dadurch gekennzeichnet, dass** mindestens eines der ersten und zweiten besonderen Ereignisse durch eine Sprecheränderung in einer Audiokomponente des audiovisuellen Inhalts identifiziert wird.

6. Verfahren nach Anspruch 1, **dadurch gekennzeichnet, dass** mindestens eines der ersten und zweiten besonderen Ereignisse durch eine Änderung einer Audioquelle in einer Audiokomponente des audiovisuellen Inhalts identifiziert wird.

7. Verfahren nach Anspruch 1, **dadurch gekennzeichnet, dass** mindestens eines der ersten und zweiten besonderen Ereignisse durch Bildanalyse in einer Videokomponente des audiovisuellen Inhalts identifiziert wird.

8. Verfahren nach einem der vorhergehenden Ansprüche, **dadurch gekennzeichnet, dass** die Ersatzfolge insofern für die ersetzte Folge repräsentativ ist, als sie eine Zusammenfassung des ersetzten Teils enthält.

9. Vorrichtung zum Ersatz, in einem audiovisuellen Inhalt, eines durch einen Zeitbereich definierten Teils des Inhalts durch eine audiovisuelle Ersatzfolge, wobei die Vorrichtung eine Verarbeitungseinheit aufweist, die geeignet ist, eine Ersatzfolge zu erzeugen, die für den ersetzten Teil des Inhalts repräsentativ ist, wobei die Anfangs- und Endzeitpunkte des Zeitbereichs durch die Erfassung eines ersten und eines zweiten besonderen Ereignisses durch Erkennung mindestens eines Schlüsselworts in einer Audiokomponente des audiovisuellen Inhalts bestimmt werden.

10. Endgerät, **dadurch gekennzeichnet, dass** es eine Ersatzvorrichtung nach Anspruch 9 aufweist.

11. Computerprogramm, das Anweisungen zur Ausführung des Ersatzverfahrens nach einem der Ansprüche 1 bis 8 enthält, wenn das Programm von einem Prozessor ausgeführt wird.

12. Prozessorlesbarer Informationsträger, auf dem ein Computerprogramm gespeichert ist, das Anweisungen zur Ausführung der Schritte des Ersatzverfahrens nach einem der Ansprüche 1 bis 8 enthält.

## Claims

1. Substitution method for replacing, in an audiovisual content, a part of the content, which part is defined by a time range, with an audiovisual substitution sequence, the method being **characterized in that** the substitution sequence is representative of the substituted part of said content and **in that** the start and end instants of the time range are determined by detection of first and second particular events by recognition of at least one keyword in an audio component of the audiovisual content.

2. Method according to Claim 1, **characterized in that** the substitution sequence is generated from a semantic analysis of the part of the content defined by the time range.

3. Method according to one of the preceding claims, **characterized in that** the substituted part extracted is stored and **in that** the substitution sequence comprises an interactive link suitable for triggering the restitution of the substituted part.

4. Method according to one of the preceding claims, **characterized in that** the audiovisual content resulting from the substitution contains an index indicating the start of the substitution sequence.

5. Method according to Claim 1, **characterized in that** at least one of the first and second particular events is identified by a change of speaker in an audio component of the audiovisual content.

6. Method according to Claim 1, **characterized in that** at least one of the first and second particular events is identified by a change of audio source in an audio component of the audiovisual content.

7. Method according to Claim 1, **characterized in that** at least one of the first and second particular events is identified by image analysis in a video component of the audiovisual content.

8. Method according to any one of the preceding claims, **characterized in that** the substitution sequence is representative of the substituted sequence **in that** it contains a summary of the substituted part.

9. Substitution device for replacing, in an audiovisual content, a part of the content, which part is defined by a time range, with an audiovisual substitution sequence, the device including a processing unit suitable for generating a substitution sequence representative of the substituted part of said content, the start and end instants of the time range being determined by detection of first and second particular events by recognition of at least one keyword in an audio component of the audiovisual content.

10. Terminal, **characterized in that** it includes a substitution device according to Claim 9.

11. Computer program containing the instructions for the execution of the substitution method according to any one of Claims 1 to 8, when the program is executed by a processor.

12. Information medium readable by a processor on which there is recorded a computer program comprising instructions for the execution of the steps of the substitution method according to any one of Claims 1 to 8.
